# EUROPEAN PATENT APPLICATION

(11) **EP 0 675 510 A1**
(43) Date of publication of application: **04.10.1995**
(21) Application number: 95302120.1
(22) Date of filing: 29.03.1995
(51) Int. Cl.: H01B 19/00

(54) **Apparatus and method for attaching end fittings in composite insulators**

(30) Priority: 29.03.1994 JP 59501/94
(71) Applicant: NGK INSULATORS, LTD., Nagoya City Aichi Pref. (JP)
(72) Inventor: Shogo, Takeshi, Kani-City, Gifu Pref. (JP)
(74) Representative: Paget, Hugh Charles Edward

(57) **Abstract**

An apparatus for attaching end fittings to a rod (13) of a composite insulator, includes a frame body (1) for restraining movement of the end fittings fitted to the rod, and a crimper (2) for crimping a peripheral portion of at least one of the end fittings around the rod. A crimping method is also disclosed.

## Description

### Background of the Invention

### (1) Field of the Invention

The present invention is directed to composite insulators each including a rod made of an electrically insulating resin or the like, such as a fiber-reinforced plastic (FRP), a housing around the rod, and end fittings. Particularly, the invention relates to an apparatus and a method for attaching end fittings to composite insulators.

### (2) Related Art Statement

Since the composite insulators are light in weight and less expensive, they have been being employed instead of porcelain insulators. The composite insulator is constituted by a rod, end fittings are crimped to opposite end portions of the rod, and a housing made of silicone rubber or the like and covering the outer periphery of the rod such that the housing may surround a part of the end fittings. Many of such composite insulators are used for supporting electric wires or cables. In such a case, tolerance of the entire length of the composite insulator may be acceptable so long as a sufficient insulating distance can be ensured between the electric wire or cable and an iron tower, etc. Thus, the allowable tolerance range is relatively wide.

On the other hand, when the composite insulator is used for supporting a blade in a breaker or as a leg for a transformer, a severe tolerance is required. That is, if the lengths of the composite insulators are not set at the same level or if the end fittings are inclined relative to the rod, locations of blades in the breaker varies to cause a trouble in an opening/closing operation. Further, in the case of the transformer, if the lengths of a plurality of the legs are not uniform or if the end fittings are inclined relative to the rod, the transformer is inclined or cannot be installed. More specifically, in the case that the insulator is used for supporting the electric wire or cable when the entire length of the composite insulator is 1500 mm, the allowable tolerance of the entire length of the insulator is ±10 mm. On the other hand, in the case that the insulator is used as a leg for the transformer when the entire length of the composite insulator is 1100 mm, the allowable tolerance range of the entire length of the composite insulator is ±0.7 mm.

Meanwhile, when the end fitting is crimped to the rod, the end fitting is not only deformed toward the rod, but also deformed in the axially outward direction of the rod as well as inclinedly deformed to the axis of the rod. For this reason, the entire length of the composite insulators and the parallel degree between the end faces of the end fittings change. In order to solve such problems, it may be considered that the end fittings are fixed to the rod with an adhesive, but the adhesive is not appropriate because it may be deteriorated in a long time use.

### SUMMARY OF THE INVENTION

The present invention has been accomplished to solve the above-mentioned problems, and is to provide an apparatus and a method for attaching end fittings in composite insulators, which apparatus and method can prevent inclination of end fittings relative to an axis of a rod when the end fittings are attached to the rod, can make the tolerance of the composite insulator fall in an allowable range, and can readily produce the composite insulator having a precision dimension.

The apparatus for attaching end fittings to a rod of a pre-composite insulator according to the present invention includes a frame body for restraining movement of the end fittings fitted to said rod, and a crimper for crimping a peripheral portion of at least one of said end fittings around the rod.

The following are preferred embodiments of the end fitting-attaching apparatus of the present invention.
(1) The frame body includes a pair of supporting members for supporting the opposite end fittings, respectively, and at least one supporting rod connecting said supporting members, and said supporting rod is provided with a distance adjuster for adjusting a distance between the opposite supporting members to meet the entire length of the pre-composite insulator.
(2) Those faces of the opposite supporting members by which the respective end fittings are supported are parallel to each other.
(3) The frame body includes means for fixing said end fittings to said supporting members, respectively.
(4) Each of said end fittings includes a flange radially outwardly extending from an outer peripheral portion thereof, and said end fitting is fixed to the supporting member via said flange.
(5) The crimper includes a plurality of crimping units arranged around an outer peripheral surface of the end fitting, and each of the crimping units includes an oil pressure cylinder, a crimping die, and a piston rod having one end slidably fitted into said oil pressure cylinder and the other connected to the crimping die, said crimping die being adapted to be press contacted with the outer periphery of the end fitting when the piston rod is expanded out of the oil pressure cylinder.
(6) A hoist is provided for vertically reversing the frame body together with the pre-composite insulator fixed to the frame body so that the opposite end fittings may be crimped around the rod by means of one crimper.

The method for attaching end fittings to a rod of a pre-composite insulator according to the present invention includes the steps of restraining movement of said end fittings fitted to the rod, and crimping a peripheral portions of the end fittings around the outer peripheral portion of the rod.

The following are preferred embodiments of the end fitting-attaching method of the present invention.
(1) An axial and radial movement of the end fittings are restrained when the said end fittings are crimped around the rod, while a distance between opposite longitudinal outer surfaces of the end fittings is maintained.
(2) Those faces of the opposite supporting members by which the respective end fittings are supported are parallel to each other.
(3) Each of said end fittings includes a flange radially outwardly extending from an outer peripheral portion thereof, and said end fitting is fixed to the supporting member via said flange.
(4) The end fitting is crimped around the outer periphery of the rod by a plurality of crimping units arranged around an outer peripheral surface of the end fitting, each of the crimping units including an oil pressure cylinder, a crimping die, and a piston rod having one end slidably fitted into said oil pressure cylinder and the other connected to the crimping die, said crimping die being adapted to be press contacted with the outer periphery of the end fitting when the piston rod is expanded out of the oil pressure cylinder.
(5) A hoist is provided for vertically reversing the frame body together with the pre-composite insulator fixed to the frame body so that the opposite end fittings may be crimped around the rod by means of one crimper.

These and other objects, features and advantages of the invention will be appreciated upon reading of the invention when taken in conjunction with the attached drawings, with the understanding that some modifications, variations and changes of the same could be made by the skilled person in the art to which the invention pertains.

### Brief Description of the Drawings

For a better understanding of the invention, reference is made to the attached drawings, wherein:
Fig. 1 is a vertically partially cross sectional view of an embodiment of the end fitting-attaching apparatus according to the present invention;
Fig. 2 is a cross sectional view of the apparatus in Fig. 1 taken along a line II-II;
Fig. 3 is an enlarged vertically cross sectional view of a lower portion of the apparatus in Fig. 1;
Fig. 4 is an an enlarged vertically cross sectional view of a upper portion of the apparatus in Fig. 1; and
Fig. 5 is an enlarged vertically cross sectional view of a upper portion of another embodiment of the end fitting-attaching apparatus according to the present invention.

### Detailed Description of the Invention

The present invention will be explained in more detail based on embodiments of the present invention with reference to the attached drawings.

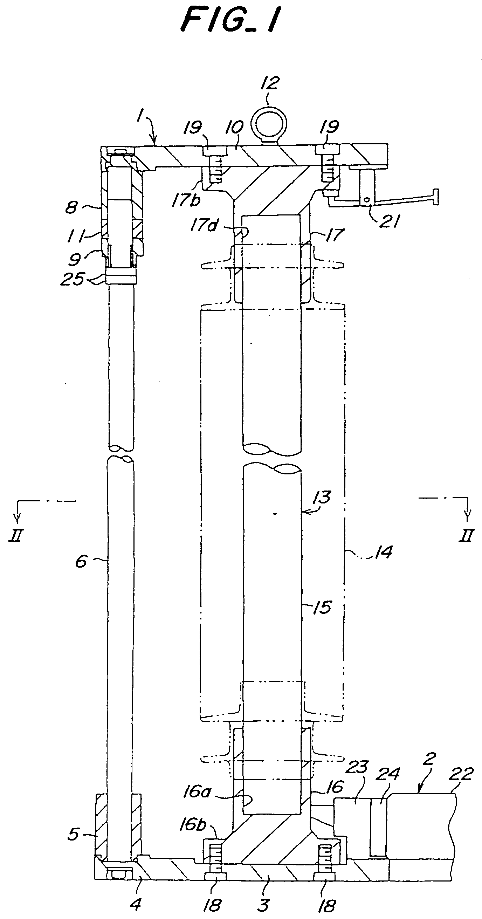

Figs. 1 through 3 illustrate an embodiment of the end fitting-attaching apparatus according to the present invention. As shown, this apparatus is constituted by a frame body 1 functioning as a jig and a crimping device 2. First, the frame body 1 will be explained.

Around a peripheral edge portion of a base plate 3 shaped as a supporting member in a flat circular form are radially outwardly provided a plurality (three in this embodiment) of projections 4, which are arranged along a common circumference at an equal interval. A root-supporting cylinder 5 is upwardly and vertically projected from an upper face of each projection 4, and a cylindrical supporting rod 6 is fixedly fitted into the root-supporting cylinder 5.

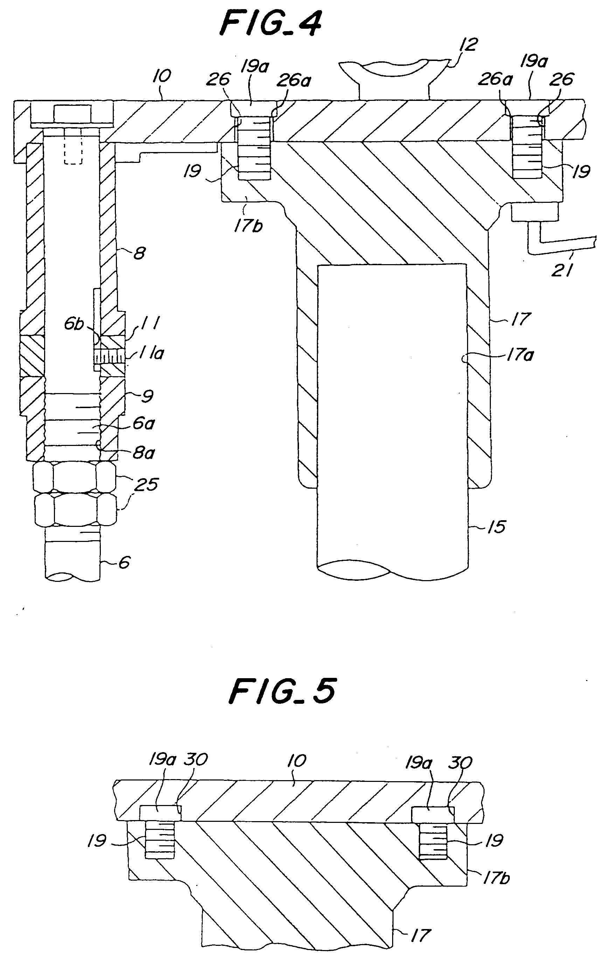

As shown in Figs. 1 and 4, a plurality of sliding cylinders 8 are fixed at an outer peripheral portion of a movable plate 10 functioning as a supporting member, and each sliding cylinder 8 is externally fitted around an upper end portion of the supporting rod 6. More specifically, a male screw 6a is cut around the middle portion of the supporting rod 6, and an adjusting nut 9 is screwed to the male screw portion 6a. A ring 11 is interposed between the lower end of the sliding cylinder 8 and the nut 9. Set screw 11a is provided in the ring 11. Flat surface 6b is formed in the supporting rod so that a D-shaped cut 6b may be engaged with a Tip Portions of the set screw 11a.

First, the set screw 11a is tightened to the D-shaped cut face 6b, and the cylinder 8 fitted around the supporting rod 6 is butted to the upper end face of the ring 11. Then, the nut 9 is tightened to the lower end face of the ring 11.

The rotation of the nut 9 is prevented by double nuts 25 tightened to the male screw 6a. The upward movement of the cylinders 8, in other words, the upward movement of the plate 10 is prevented by pressing down the plate 10 by using a pressing means not shown. The upper face of the base plate 3 is parallel to the lower face of the movable plate 10. A length adjuster is constituted by the supporting rod 6, the male screw 6a, the nut 9 and the sliding cylinder 8. Therefore, the movable plate 10 is vertically movable by turning the nut 9. After the movable plate 10 is moved to a desired location, the movable plate 10 is fixed to this location by tightening with the double nuts 25 and the fixing screw 11b. A ring 12 is screwed to a screw hole in an upper central portion of the movable plate 10. To the ring 12 is hitched a hook of a hoist not shown for vertically reversing the frame body. Although not shown, when the frame body 1 is vertically reversed, the ring 12 is screwed into a screw hole in an upper central portion of the base plate 3 not shown.

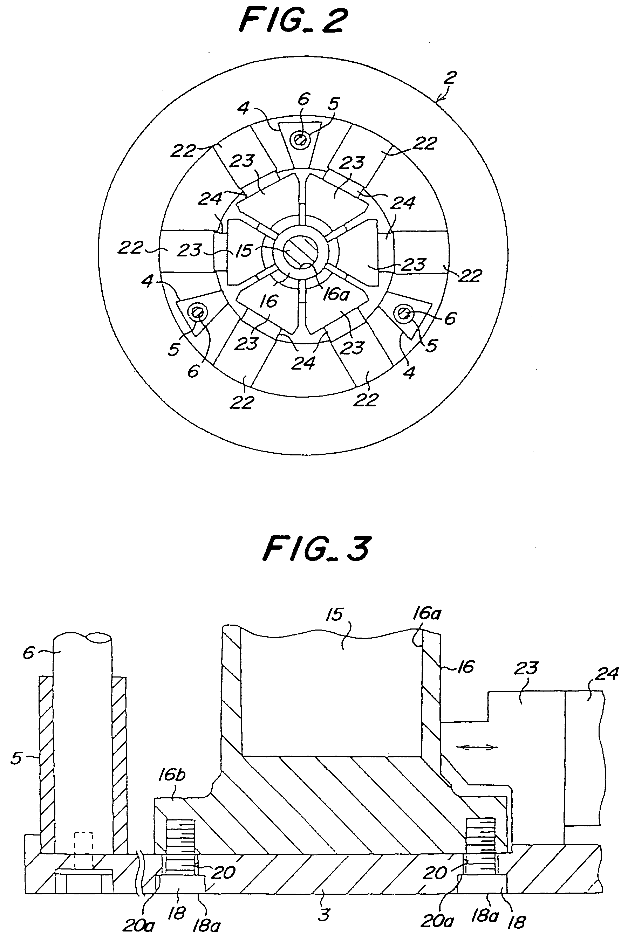

As shown in Figs. 1 and 2, a pre-composite insulator 13 is detachably located in a central area between the base plate 3 and the movable plate 10. The term "pre-composite insulator" used herein means a combination of a rod and a pair of end fittings, which will give a composite insulator after a housing made of EPDM (ethylene-propylene-diene copolymer) or silicone rubber is provided around the outer periphery of the rod and a part of the end fittings. The rod 15 is provided with end fittings 16, 17 at opposite ends thereof. The rod 15 is made of a fiber-reinforced plastic (FRP) in a cylindrical form.

Each of the end fittings 16, 17 is shaped in an almost cylindrical bottomed form. A flange portion is formed projecting from the outer peripheral edge of the flange 16b, 17b. One of the end fittings, 16b of 16, is placed on the upper face of the base plate 3. On the other hand, the flange 17b of the other end fitting 17 is butted against the lower face of the movable plate 10. As shown in Figs. 3 and 4, a plurality of bolts 18, 19 are screwed to screw holes of the flange 16b, 17b through dowel holes 20, 26. The inner peripheral surface of each of the dowel holes 20, 26 is provided with a step 20a, 26a, and a head 18a, 19a is fitted to the step 20a, 26a. In this state, the composite insulator 13 is located through the end fittings 16, 17 between the base plate 3 and the movable plate 10.

Under the lower face of the movable plate 10 is provided a toggle clamp 21 for preventing downward movement of the end fitting 17. Such toggle clamp or clamps 21 may be provided at desired location or locations around the flange 17b of the end fitting 17.

Next, the crimping device will be explained.

As shown in Figs. 1 and 2, the crimping device 2 for crimping the end fitting around the rod is constituted by oil pressure cylinders 22 and crimping dies 23. A plurality (six in this embodiment) of the oil pressure cylinders 22 are arranged at an equal interval around the base plate 3. Piston rods 24 of the oil pressure cylinders 22 are simultaneously expanded or shrunk in radial directions of the pre-composite insulator as shown by solid lines in Fig. 3. The crimping die 23 is arranged between a tip of each piston rod 24 and the end fitting 16 and on the upper face of the base plate 3. The end face of the tip of the crimping die 23 is shaped in an arcuate form, as viewed in plane, having the same radius of curvature as that of the outer periphery of the end fitting 16.

When the piston rods 24 are expanded, the crimping dies 23 are moved to the end fitting 16 and press contacted against the outer peripheral wall of the gripping 16 at their tip faces. Thereby, the end fitting 16 is pressed in radially inner directions and crimped around the rod by the crimping dies 23.

Next, a method for fitting the end fittings 16 and 17 to the rod 15 by using the fitting apparatus thus constructed will be explained. First, before the rod 15 is placed between the base plate 3 and the movable plate 10 together with the end fittings 16, 17, the piston rods 24 of the oil pressure cylinders 22 are shrunk. Each of end faces of the rod 15 is butted against a bottom face of a hole 16a, 17a of the end fitting 16, 17 to restrain axial movement of the rod 15.

In this state, the pre-composite insulator 13 (the rod with the end fittings) is placed between the base plate 3 and the movable plate 10. Then, the bolts 18 and 19 are screwed to the flanges 16a and 17a of the end fittings 16 and 17 through the dowel holes 20, 26, respectively. Thereafter, each nut 9 is turned to closely fit the movable plate 10 to the upper face of the end fitting 17, and this state is fixed by means of the double nuts 25 and the stopping screw 11a. Then, the bolts 18, 19 are closely tightened to the flanges through the respective plates. At the same time, the toggle clamp 21 is tightened to the gripping member 17 so that the end fitting 17 may not be moved downwardly from the moving plate 10.

Next, the oil pressure cylinders 22 are operated to simultaneously extend the piston rods 24 in the radially inner directions of the rods 15. By this extension, the tip end surfaces of the crimping dies 23 are press contacted with the outer peripheral surface of the end fitting 16. The inner peripheral surface of the end fitting 16 is crimped to the outer peripheral surface of the rod 15. At that time, since the distance between the base plate 3 and the movable plate is restrained by the supporting rod 6, the end fitting 16 will not move in the axially outer direction of the rod 15. Further, since the movement of the flanges 16b and 17b of the end fittings 16, 17 is restrained relative to the base plate 3 and the movable plate 10, respectively, by means of the bolts 18, 19, the end fittings 16, 17 will not be deformed or moved in any direction other than the axial direction. Therefore, the end fittings 16, 17 are maintained at the upper face of the base plate 3 and the lower face of the movable plate 10, and the parallel degree of the fitting end faces of the end fittings 16, 17 can be assured.

Next, the crimping dies 23 are removed from the base plate 3, a hook of a hoist or the like is hitched to the ring 12, the frame body 1 is vertically reversed, and the ring 12 is removed from the movable plate 10 and screwed to the base plate 3. While the frame body 1 is maintained vertically unversed, the crimping die 23 is placed on the movable plate 10 and the end fitting 17 is crimped around the rod in the same manner as mentioned above. In this case, the expansion and the deformation of the end fitting 17 can be prevented. As a result, the pre-composite insulator with the end fittings crimped to the rod can be obtained without damaging the parallel degree between the opposite flanges 16b, 17b, while the entire length of the pre-composite insulator is maintained in an allowable tolerance range.

Further, since the location of the movable plate 10 can be adjusted by rotating the nut 9 of each of the supporting rods 6, the distance between the base plate 3 and the movable plate 10 can be adjusted in a non-stepwise fashion. Therefore, the end fittings can be crimped around the rod to flexibly cope with changes in the length of the rod 15.

The present invention may be appropriately changed as follows by way of example without being limited to the above mentioned embodiment and without departing from the scope of the present invention.
(1) In the above-mentioned embodiment, the dowel holes 20, 26 are formed in the base plate 3 and the movable plate 10, and the bolts 18, 19 are tightened to the end fittings 16, 17, respectively, through the dowel holes 20, 26. Besides this, as shown in Fig. 5, it may be that recesses 30 are formed at the under face of the movable plate 10, and a head portion 19a of the bolt 19 projecting from the upper face of the end fitting 17 is fitted into each of the recesses 30. Although not shown, a similar recess 30' may be formed at the upper face of the base plate 3 as in the case of the movable plate 10 so that a head portion 18a of a bolt 18 may be fitted into each of the recesses 30'. By so constructing, the end fittings 16, 17 can be more easily located relative to the plates 3, 10. Further, it may be that the bolts 18 and 19 are omitted, and instead a plurality of projections are integrally extended outside from the end fittings 16, 17 and these projections are fitted into the recesses 30. By so constructing, the end fittings 16, 17 can be easily located between the opposite plates 3, 10. Alternatively, it may be that the bolts 18, 19 are omitted, and instead a plurality of projectings are extended outwardly from the end fittings and fitted into the respective recesses 30. Furthermore, the projections and the recesses 30 may be shaped in a polygonal form. By so constructing, only one projection may be provided to prevent rotation of the end fitting 17. Therefore, the number of necessary constituent parts can be reduced to lower the production cost.
(2) The base plate 3 and the movable plates 10 are designed in a large diameter, and the crimping devices are fixed to the plates 3 and 10, respectively. By so constructing, the lower and upper end fittings 16, 17 can be simultaneously crimped around the rod without necessity to vertically inverting the frame body 1.
(3) In the above embodiment, the crimping device 2 is provided separately from the frame body 1. However, they may be integrally provided.
(4) In the above embodiment, the movable plate 10 is moved by turning the nut 9. Besides this, it may be that the ring 11 and the screw 11a are omitted, and instead the sliding cylinder 8 is rotatably supported by the movable plate 10, and the sliding cylinder 8 is integrated with the nut 9.
(5) Although three supporting rods 6 are used in the above embodiment, the number of the supporting rods needs not be limited to three, but may be changed to any appropriate number. Further, the length of the supporting leg is not limited to a specific value, but may be changed to any arbitrary value.

Although the embodiments of the present invention have been explained above, the technical idea grasped from these embodiments will be explained together with their effects.

As mentioned in detail, the apparatus for attaching end fittings to a rod of a pre-composite insulator according to the present invention includes a frame body for restraining movement of the end fittings fitted to said rod, and a crimper for crimping a peripheral portion of at least one of said end fittings around the rod. The composite insulator having a precise dimension can be easily produced, while the tolerance of the entire length of the composite insulator and the parallel degree between the end fittings are set in their respective allowable ranges.

The following are preferred embodiments of the end fitting-attaching apparatus of the present invention have the following advantages.
(1) The frame body includes a pair of supporting members for supporting the opposite end fittings, respectively, and at least one supporting rod connecting said supporting members, and said supporting rod is provided with a distance adjuster for adjusting a distance between the opposite supporting members to meet the entire length of the pre-composite insulator. Since the distance between the supporting members can be adjusted to flexibly cope with the production of the composite insulators having various lengths.
(2) Those faces of the opposite supporting members by which the respective end fittings are supported are parallel to each other. Therefore, the end fittings can be prevented from being inclinedly by deformed with respect to the axis of the composite insulator.
(3) The frame body includes means for fixing said end fittings to said supporting members, respectively. Thereby, the parallel degree can be more fixedly attained, and the inclined deformation can be more prevented.
(4) Each of said end fittings includes a flange radially outwardly extending from an outer peripheral portion thereof, and said end fitting is fixed to the supporting member via said flange. The effect in (3) can be also attained.
(5) The crimper includes a plurality of crimping units arranged around an outer peripheral surface of the end fitting, and each of the crimping units includes an oil pressure cylinder, a crimping die, and a piston rod having one end slidably fitted into said oil pressure cylinder and the other connected to the crimping die, said crimping die being adapted to be press contacted with the outer periphery of the end fitting when the piston rod is expanded out of the oil pressure cylinder. Thereby, the end fittings can be uniformly crimped around the rod.
(6) A hoist is provided for vertically reversing the frame body together with the pre-composite insulator fixed to the frame body so that the opposite end fittings may be crimped around the rod by means of one crimper. The opposite end fittings can be crimped around the rod by using only one crimper.

The method for attaching end fittings to a rod of a pre-composite insulator according to the present invention includes the steps of restraining movement of said end fittings fitted to the rod, and crimping a peripheral portions of the end fittings around the outer peripheral portion of the rod. In this method, the effects obtained in the above apparatus can be also similarly obtained, and detailed explanation is omitted.

## Claims

1. An apparatus for attaching end fittings to a rod of a pre-composite insulator, said apparatus comprising a frame body for restraining movement of the end fittings fitted to said rod, and a crimper for crimping a peripheral portion of at least one of said end fittings around the rod.

2. The apparatus set forth in Claim 1, wherein said frame body includes a pair of supporting members for supporting the opposite end fittings, respectively, and at least one supporting rod connecting said supporting members, and said supporting rod is provided with a distance adjuster for adjusting a distance between the opposite supporting members to meet the entire length of the pre-composite insulator.

3. The apparatus set forth in Claim 2 wherein those faces of the opposite supporting members by which the respective end fittings are supported are parallel to each other.

4. The apparatus set forth in Claim 2 or 3, wherein said frame body includes means for fixing said end fittings to said supporting members, respectively.

5. The apparatus set forth in Claim 4, wherein each of said end fittings includes a flange radially outwardly extending from an outer peripheral portion thereof, and said end fitting is fixed to the supporting member via said flange.

6. The apparatus set forth in Claim 1 or 2, wherein said crimper includes a plurality of crimping units arranged around an outer peripheral surface of the end fitting, and each of the crimping units includes an oil pressure cylinder, a crimping die, and a piston rod having one end slidably fitted into said oil pressure cylinder and the other connected to the crimping die, said crimping die being adapted to be press contacted with the outer periphery of the end fitting when the piston rod is expanded out of the oil pressure cylinder.

7. The apparatus set forth in Claim 1 or 2, wherein a hoist is provided for vertically reversing the frame body together with the pre-composite insulator fixed to the frame body so that the opposite end fittings may be crimped around the rod by means of one crimper.

8. A method for attaching end fittings to a rod of a pre-composite insulator, said method including the steps of restraining movement of said end fittings fitted to the rod, and crimping a peripheral portions of the end fittings around the outer peripheral portion of the rod.

9. The method set forth in Claim 8, wherein an axial and radial movement of the end fittings are restrained when the said end fittings are crimped around the rod, while a distance between opposite longitudinal outer surfaces of the end fittings is maintained.

10. The method set forth in Claim 8 or 9, wherein those faces of the opposite supporting members by which the respective end fittings are supported are parallel to each other.

11. The apparatus set forth in Claim 8 or 9, wherein each of said end fittings includes a flange radially outwardly extending from an outer peripheral portion thereof, and said end fitting is fixed to the supporting member via said flange.

12. The method set forth in Claim 8 or 9, wherein the end fitting is crimped around the outer periphery of the rod by a plurality of crimping units arranged around an outer peripheral surface of the end fitting, each of the crimping units including an oil pressure cylinder, a crimping die, and a piston rod having one end slidably fitted into said oil pressure cylinder and the other connected to the crimping die, said crimping die being adapted to be press contacted with the outer periphery of the end fitting when the piston rod is expanded out of the oil pressure cylinder.

13. The apparatus set forth in Claim 8 or 9, wherein a hoist is provided for vertically reversing the frame body together with the pre-composite insulator fixed to the frame body so that the opposite end fittings may be crimped around the rod by means of one crimper.
